# EUROPEAN PATENT APPLICATION

(11) **EP 2 254 083 A1**
(43) Date of publication of application: **24.11.2010**
(21) Application number: 10005255.4
(22) Date of filing: 19.05.2010
(51) Int. Cl.: G06Q 10/00

(54) **Automated area inspection and recordkeeping system and method**

(30) Priority: 20.05.2009 US 179902 P
(71) Applicant: Ahold Licensing SA, 1204 Geneva (CH)
(72) Inventor: Alonso, Daniel Jason, Carlisle, PA 17013-0249 (US); Christman, Lizabeth Pirnik, Camp Hill, PA 17011 (US); Howard, Christopher Glenn, York Haven, PA 17370 (US); Krachinski Artley, Johnna, East Berlin, PA 17306 (US); Montepara, Nicola, Carlisle, PA 17013-0249 (US); Strohecker, Stephen Bryan, Carlisle, PA 17013-0249 (US)
(74) Representative: Prinz & Partner

(57) **Abstract**

The invention relates to a premises inspection method comprising: accessing, by a user, an inspection tour stored on a portable data terminal, the inspection tour comprising a plurality of location descriptions associated with a plurality of locations of a premises; displaying on the portable data terminal a location description from the plurality of location descriptions; scanning a machine readable location identifier with the portable data terminal upon arrival at a location of the premises associated with the displayed location description, the location identifier comprising inspection data associated with the displayed location description the premises; inspecting an area adjacent to the location of the premises to determine whether a hazardous condition exists; in response to determining an existence of a hazardous condition at the area adjacent to the location of the premises, remedying the hazardous condition, wherein remedying the hazardous condition comprising: identifying at least one hazardous condition from a predetermined list of hazardous conditions; accessing a set of instructions for resolving the at least one hazardous condition; selecting one of: resolving the at least one hazardous condition immediately or resolving the at least one hazardous condition at a later time; and repeating the steps of identifying at least one hazardous condition from a predetermined list of hazardous conditions; accessing a set of instructions for resolving the at least one hazardous condition; and resolving the at least one hazardous condition immediately or resolving the at least one hazardous condition at a later time until each identified hazardous condition is selected for immediate or later resolution; repeating the steps of identifying at least one hazardous condition from a predetermined list of hazardous conditions; accessing a set of instructions for resolving the at least one hazardous condition; and resolving the at least one hazardous condition immediately or resolving the at least one hazardous condition at a later time for each respective location associated with the plurality of location descriptions; storing the scanned identification data and inspection information associated with each location description of the plurality of location descriptions; and transmitting the stored inspection data contemporaneously to a communications network.

## Description

### CROSS-REFERENCE TO RELATED APPLICATIONS

This patent claims priority from and the benefit of U.S. Provisional Application No. 61/179,902 entitled AUTOMATED AREA INSPECTION AND RECORDKEEPING SYSTEM AND METHOD, filed May 20, 2009 which is hereby incorporated by reference.

### FIELD

The present invention is directed to an automated area inspection and recordkeeping system, and more particularly to an automated system and method for remotely collecting and recording data on hazardous conditions in a retail store or other establishment with publicly accessible areas.

### BACKGROUND

Retail establishments, for example, grocery stores and similar public areas, strive to maintain safe premises for their customers so as to avoid accidental injury or inconvenience to their clientele. In addition to maintaining clean premises, businesses need to know of potentially hazardous conditions in order to assign employees to correct unsafe conditions, and to track the status of assignments to verify that such conditions are timely and completely corrected.

Many customer injuries occur in retail stores as a result of customers falling in the store, resulting in liability claims and lawsuits, which adversely affects a business. Some businesses undertake regular periodic walk-around inspection tours according to a schedule to identify hazards such as liquids or food spills on walkways and the like, and to identify areas that require attention due to spills, fallen debris or products, or other conditions. Floor safety inspection tours are documented to ensure that hazards have been eliminated in a timely manner, and to record any maintenance needs or other followup as may be appropriate.

Manual logging procedures that are sometimes used may be unreliable. Manual logs may be fabricated or modified at a later time. It may be difficult and costly for a manager to monitor inspectors to ensure that inspection procedures are followed and to verify the contents of paper records. Such manually-generated records may be challenged as lacking credibility. The hand-written records may not be convincing evidence for demonstrating, for example to a jury, that a business implemented reasonable precautions to prevent customer injuries, or that an alleged hazardous condition existed or was corrected at a predetermined time. Records may also fail to identify an employee that performed a scheduled inspection tour. In many instances months or years may pass before the records are offered to substantiate factual accounts of an injury or incident, making the documents and authentication less reliable. A paper trail or chain of custody for inspection documents may be difficult to maintain for such a long period, as documents may be lost or misplaced, and cast doubt on the integrity of the inspection records.

Inspection systems exist that use electronic devices to record and upload inspection data to a third party database for storage and retrieval, to improve reliability of records. However, these systems typically operate in a batch process and require a user or manager to periodically connect to a host computer in order to complete the reporting process. Failure to upload the data in a timely manner may compromise the integrity of the information, such as the identity of the user and time-stamp data.

Therefore, there is a need for an automated inspection method to provide inspection data to a central database or repository at a regular interval for later retrieval.

### SUMMARY

The present application relates to a method for premises inspection including: initiating a software application on a portable data terminal; accessing, by a user, an inspection tour stored on the portable data terminal, the inspection tour including a plurality of location descriptions associated with a plurality of locations of a premises; displaying on the portable data terminal a first location description from the plurality of location descriptions; proceeding to the first location; scanning with the portable data terminal a machine readable location identifier including inspection data associated with the first location; visually inspecting an area of the premises adjacent to the first location to determine whether a hazardous condition exists; in response to determining an existence of a hazardous condition at the first location: identifying at least one hazardous condition from a predetermined list of hazardous conditions; for each of the identified at least one hazardous condition, accessing a set of instructions for resolving the identified at least one hazardous condition; selecting one of: resolving the identified at least one hazardous condition immediately; or resolving the identified at least one hazardous condition at a later time; repeating the steps of providing instructions and selecting for each identified hazardous condition until each identified hazardous condition is selected for immediate or later resolution; in response to 1) determining no hazardous condition exists, or 2) completing the selecting step for every identified hazardous condition; proceeding to a next location of the plurality of location descriptions; repeating the inspection steps of scanning and visually inspecting, identifying and selecting at the next location, for each respective location associated with the plurality of location descriptions; storing the scanned identification data associated with each location of the plurality of location descriptions; and automatically transmitting the stored inspection data contemporaneously to a communications network.

The present application further relates to an automated system for premises inspection. The premises inspection system includes a portable data terminal in communication with a data network, a web interface for accessing an internet or intranet connection to a remote data storage device, the portable data terminal including a software application configured to: access an inspection tour by a user, the inspection tour comprising a plurality of location descriptions associated with a plurality of locations within a premises; display on the portable data terminal a plurality of location descriptions; scan with the portable data terminal a machine readable location identifier including inspection data associated with the first location; prompt the user with inspection criteria for an area of the premises adjacent to each location description of the plurality of location descriptions to determine whether a hazardous condition exists; in response to determining an existence of a hazardous condition at the first location, provide selection options including: identify at least one hazardous condition from a predetermined plurality of possible hazardous conditions; store the scanned identification data associated with each location of the plurality of location descriptions; and automatically transmit the stored inspection data contemporaneously to a communications network.

The present application also relates to a vehicle for use in association with an automated inspection system. The vehicle includes a frame portion and at least one wheel rotatably attached to the frame. A plurality of brackets is attached to the frame. Each bracket defines an opening for receiving a container. The containers are removably supported by the brackets. A machine readable device identifier is affixed to vehicle.

Other features and advantages of the present invention will be apparent from the following more detailed description of the preferred embodiments, taken in conjunction with the accompanying drawings which illustrate, by way of example, the principles of the invention.

### BRIEF DESCRIPTION OF THE DRAWINGS

FIG. 1 is an exemplary diagram of a premises floor layout and inspection tour.

FIG. 2 illustrates schematically an exemplary wireless network and its components.

FIG. 3 is a process flow chart of an exemplary embodiment of the store inspection system.

FIG. 3A shows a user login display.

FIG. 3B shows a login status display.

FIG. 3C shows an initial inspection display screen for an inspection tour.

FIG. 3D shows an inspection display screen for subsequent locations of the inspection tour.

FIG. 3E shows a display for selecting multiple hazard sources.

FIG. 3F shows a display having instructions for resolving an exemplary hazard.

FIG. 3G shows an inspection display screen for a final location of an inspection tour.

FIG. 3H shows an inspection display screen for entering reasons for skipping a location on an inspection tour.

FIG. 3I shows an inspection display screen for a hazard followup.

FIG. 3J shows an inspection display screen for a hazard followup confirmation.

FIG. 3K shows an inspection display screen for a hazard confirmation in which a hazard is resolved at a location before proceeding to a next inspection tour location.

FIG. 3L shows an inspection display screen for a paging feature.

FIG. 3M shows an inspection display screen for a paging status feature.

FIGS. 4 - 14 show exemplary inspection data reports.

FIG. 15 shows a side elevational view of a vehicle for use in conjunction with the inspection tour.

FIG. 16 shows a front elevational view of the vehicle of FIG. 15.

FIGS. 17 and 18 show an exemplary flow chart of a premises inspection method.

### DETAILED DESCRIPTION OF THE INVENTION

It should be understood that the application is not limited to the details or methodology set forth in the following description or illustrated in the figures. It should also be understood that the phraseology and terminology employed herein is for the purpose of description only and should not be regarded as limiting. While the exemplary embodiments illustrated in the figures and described herein are presently preferred, it should be understood that these embodiments are offered by way of example only. Accordingly, the present application is not limited to a particular embodiment, but extends to various modifications that nevertheless fall within the scope of the appended claims. The order or sequence of any processes or method steps may be varied or re-sequenced according to alternative embodiments.

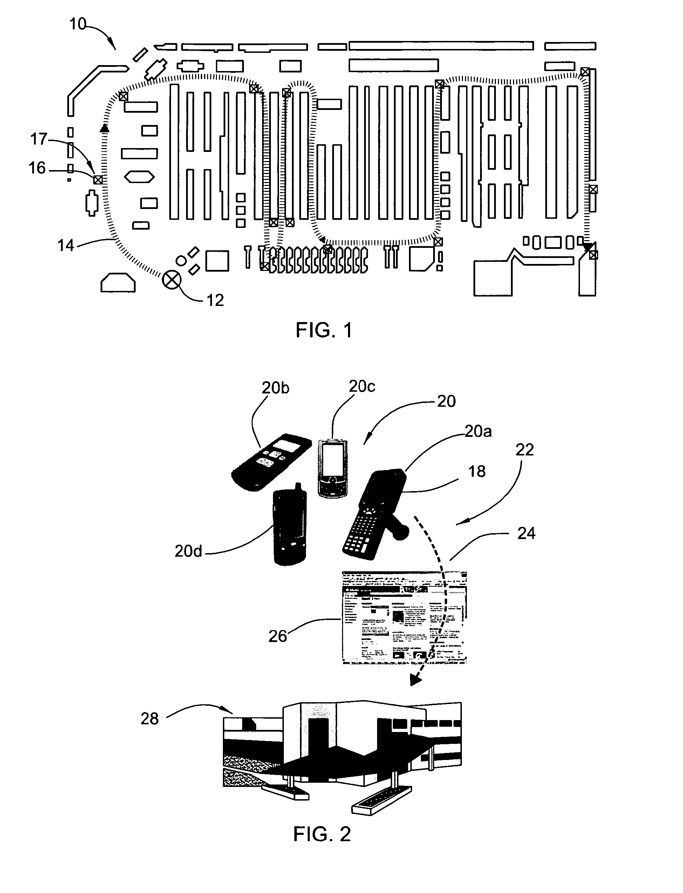

Referring to FIGS. 1 and 2, a user 12, for example, a store inspector, is provided with a diagram 10 of a store or premises, that includes an inspection tour 14. The inspection tour 14 includes a sequence and location of multiple inspection points 16 marked with a unique identifier 17, for example, a bar code or a radio frequency identification (RFID) tag. User 12 performs inspection tour 14 by proceeding to each inspection point 16 in the sequence indicated by tour 14, and operating a portable data terminal (PDT) 20 to read each unique identifier 17, e.g., via electronic or machine reading devices such as a laser scanner. PDT 20 may include, for example, a handheld mobile computer including an integrated laser barcode scan engine 20a, RFID 20b, or other portable electronic devices with scanning capabilities 20c, 20d. In another embodiment, PDT 20 may be a Symbol Technologies Model MC-9000 series or other Windows® CE enabled device. Unique identifier 17 is only readable locally such that user 12 must be physically located proximate to, i.e., within several feet of, unique identifier 17 in order to obtain an electronic reading of unique identifier 17. Each unique identifier 17 is encoded with data including a location of its associated inspection point 16.

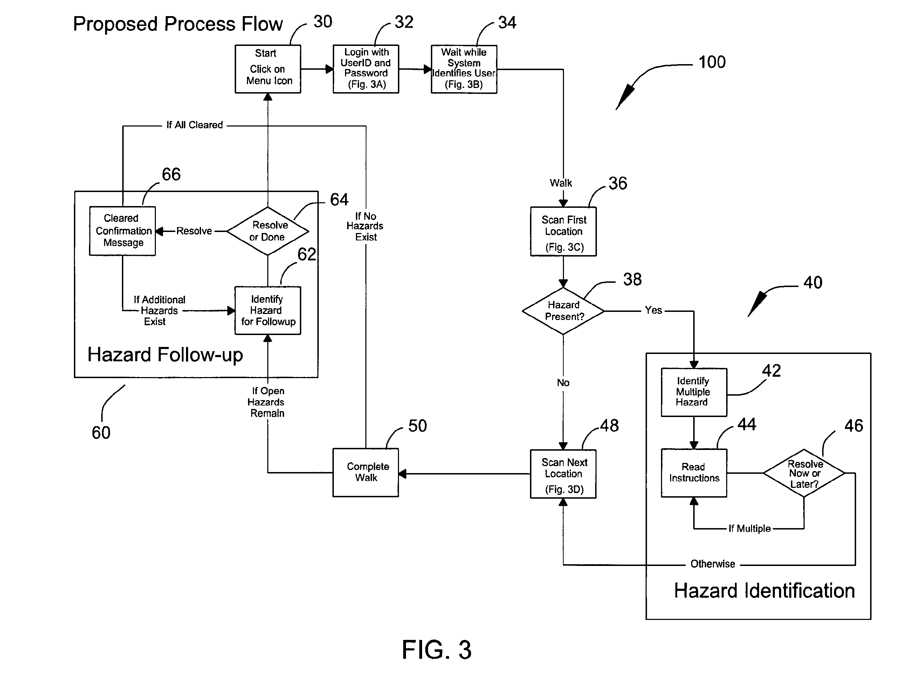

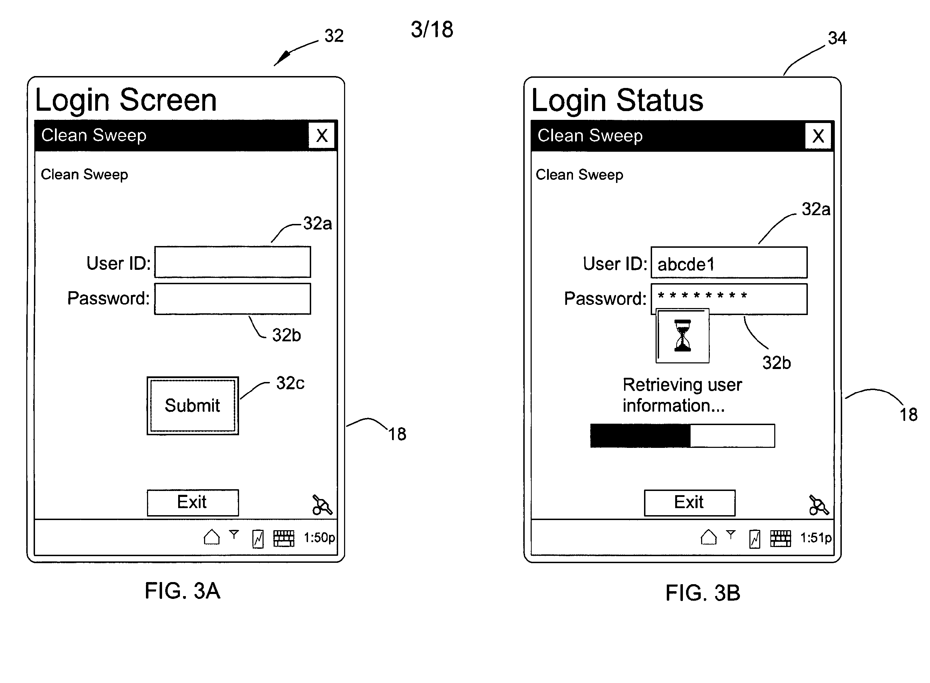

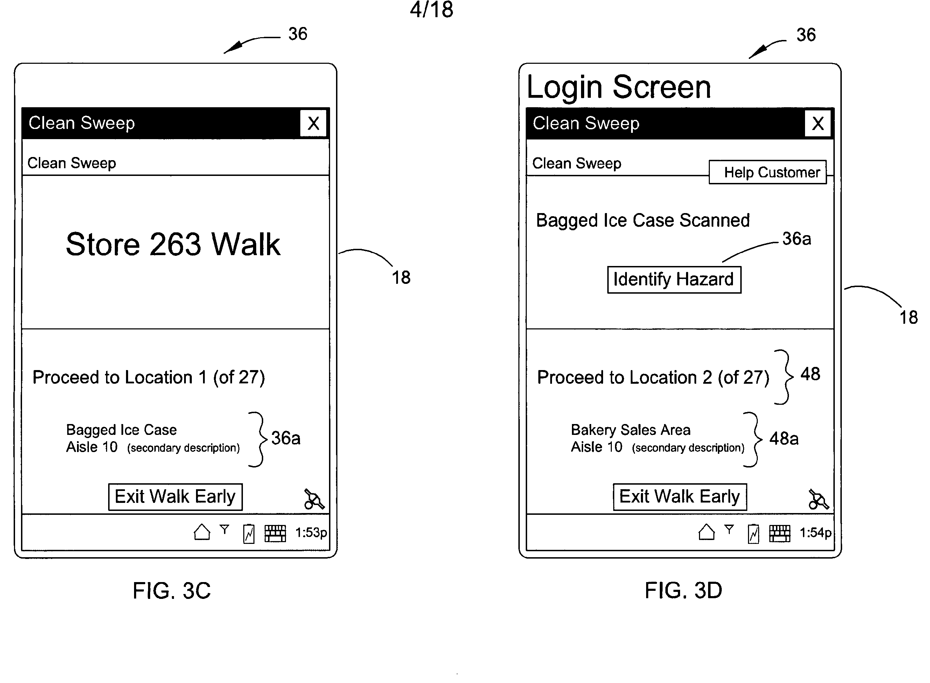

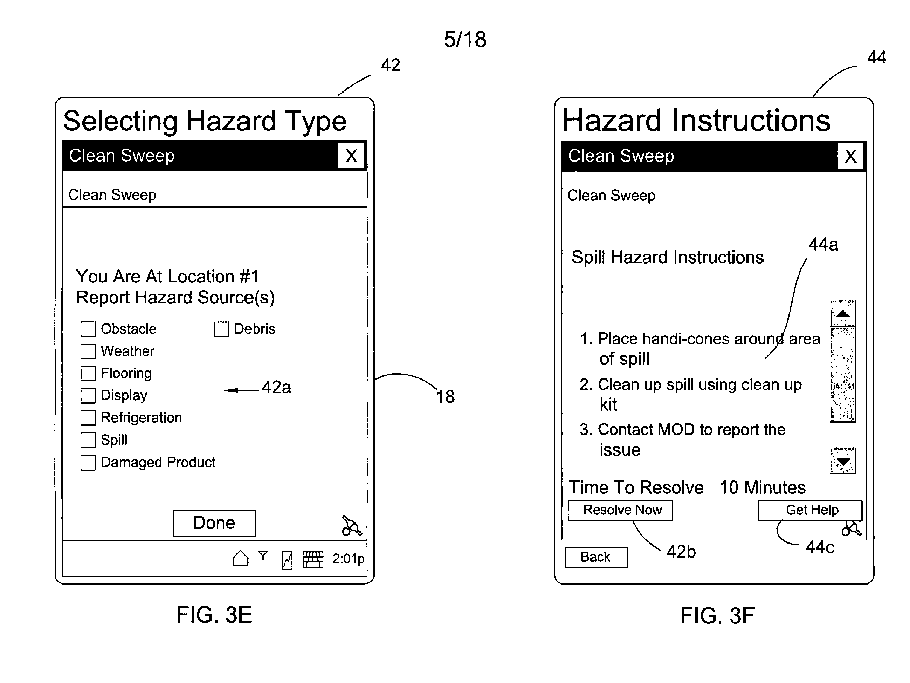

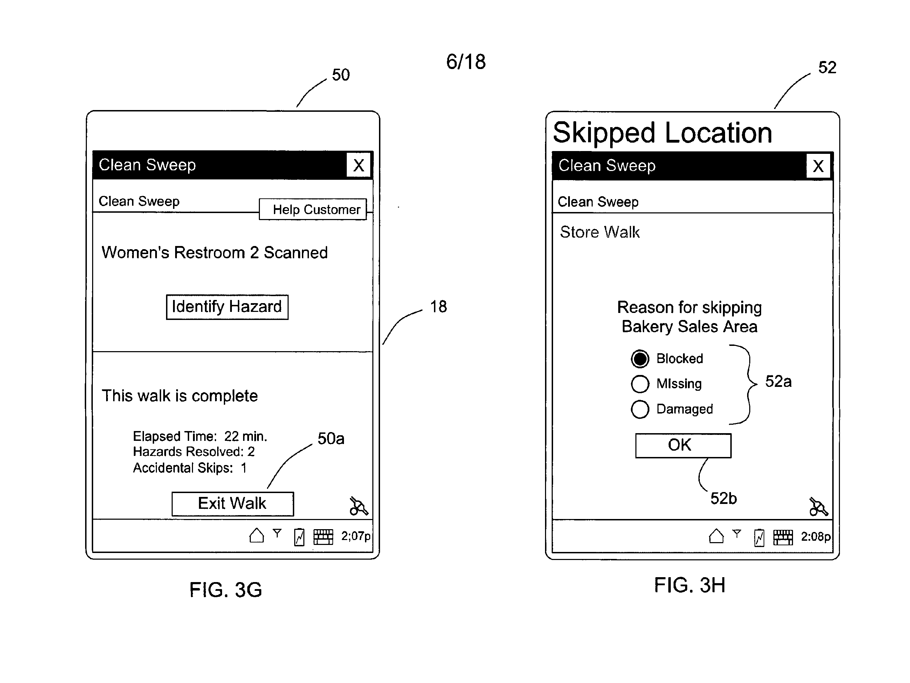

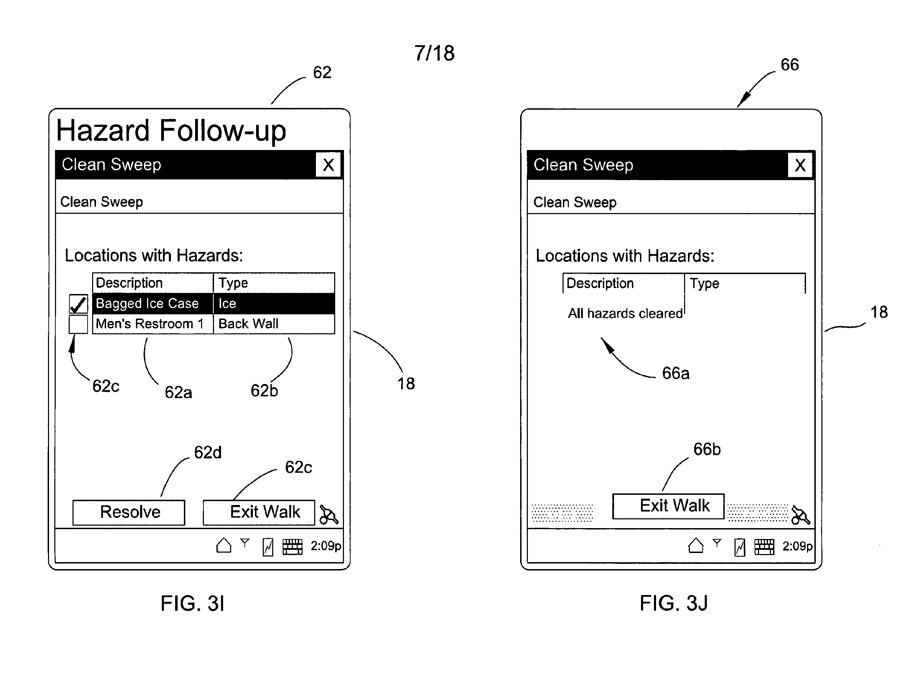

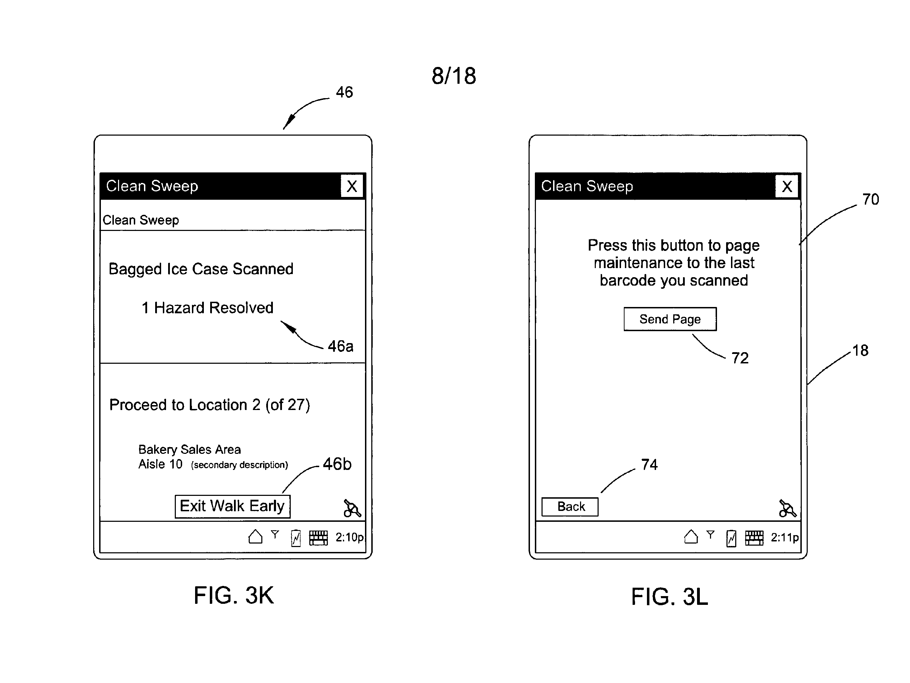

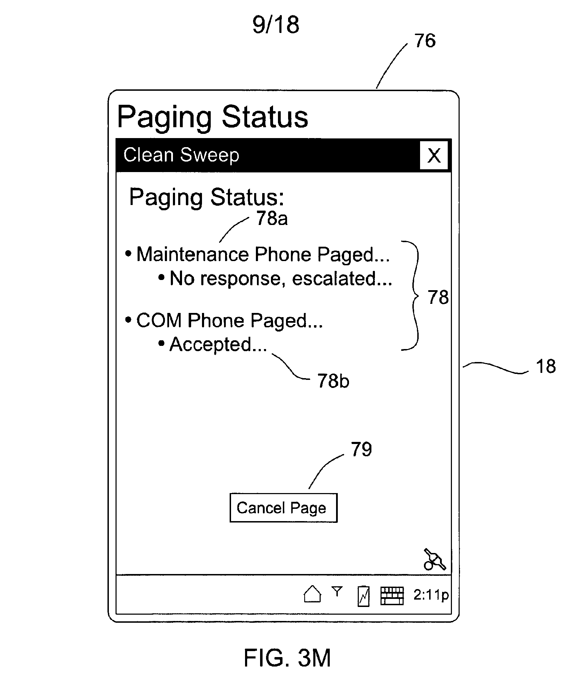

A Store Inspection System (SIS) 100 (see, e.g., FIG. 3) is initiated through PDT 20 to perform inspection tour 14 or walk-through of the premises for reporting and resolving hazards. The SIS software application or web application, as described in greater detail below, is initiated by selecting a selection icon displayed on display 18 of PDT 20. PDT 20 is configured to provide prompts to user 12, as user 12 progresses through each step of the software application. The software application enables user 12 to record location response parameters (e.g., that the area is clear, the refrigeration equipment is functioning, etc.), and enables user 12 to record store conditions during an inspection tour 14.

FIG. 2 shows an exemplary embodiment of a wireless network 22. Network 22 is arranged for wireless communication with one or more PDTs 20, 20a, 20b, 20c or 20d. A communication path 24 may include an intranet or internet portal 26 arranged for secure communications with a host computer 28, e.g., a remote data storage device such as a server. Host computer 28 and associated software applications are normally located at a remote site, although in some instances host computer 28 may be local (i.e., at the store or premises). The local intranet portal 26 provides the store with access to retrieve historical inspection data, and the ability to update the status of reported sub- standard or hazardous conditions. Further, the portal 26 may provide an alert to the store when, for example, a substandard condition is not cleared within a predetermined interval. A corporate user intranet interface or portal 26 provides corporate users the ability to monitor store inspection compliance, generate reports on non-compliance issues, and provides access to historical inspection data and the ability to export data for analysis.

An administrative interface or portal 26 is also provided that enables the ability to modify existing inspection application parameters. The administrative portal 26 also provides the ability for corporate users to set up new stores for an inspection application and the ability to modify and create new inspection applications. Administrative portal 26 may also be hosted internally or by a third party on a secured intranet or Internet website, with the portal 26 restricted to be accessible by administrative personnel that may be authorized on a distinct security level. The administrative portal 26 allows data from all stores to be collected for multiple purposes. Administrative functions may include updating software parameters or variables, e.g., barcode description, aisle types, hazardous condition menus, inspection tour types, and inspection type relationships, as well as configuring all stores inspection tours, and updating inspection tour scheduling.

Referring to FIG. 3, a process flow chart sets forth an exemplary embodiment of the system 100. At step 30, the user selects an icon from a menu to initiate the system 100. The system 100 proceeds to step 32 to allow user 12 to securely access system 100 via a user log in screen that is displayed on PDT 20. At step 32 (FIG. 3A) user 12 enters a unique identifier in User ID field 32a and a secure code in password field 32b and selects button 32c to submit the information, to ensure that only authorized and registered inspectors perform inspection tours 14. System 100 authenticates the user credentials (FIG. 3B), at step 34. Next, at step 36, the user 12 is provided with a first inspection point 16, for example a bar code location in the associated tour 14. The inspection point 16 may be illustrated as a graphical map or display of the inspection area 10, or as a textual description 36a (FIG. 3C) that is obtained by PDT 20 from a location database.

At the outset of inspection tour 14, a time stamp function (not shown) may be automatically executed to indicate the time the current inspection begins. PDT 20 may include an internal timing device or clock for recording, tracking and displaying a time or time interval associated with any event or sequence of events that occur during an inspection tour 14. User 12 proceeds to a first inspection point 16 and scans a bar code or other identification element, for example, an RFID microchip, while at the same time observing the area for potential hazardous or other notable conditions.

Referring to FIG. 3D, if user 12 observes no hazard, or other conditions at step 38, the entry is transferred via an RF signal to a network server and proceeds to the next location in the database 20. However, if user 12 observes a hazard existing at or proximate to the location associated with the location identifier, user 12 identifies the hazard before proceeding to the next inspection point. Display 38, as illustrated in FIG. 3D, includes a selection button 38a for user 12 to initiate an optional hazard identification process 40.

Referring to FIG. 3E, if a hazard exists at the current location, user 12 proceeds to hazard identification process 40. At step 42 (FIG. 3), user 12 selects "Identify Hazard" button 38a and system 100 generates a listing 42a of predetermined hazards. A listing of predetermined hazards is displayed however, persons skilled in the art will appreciate that additional, or fewer, hazard types may be appropriate for various retail or commercial enterprises, and the hazard listing may vary accordingly.

Next at step 44, PDT 20 displays a set of hazard instructions 44a (FIG. 3F) for user 12 to follow in resolving the hazard. Each hazard identified in list 42a includes a corresponding set of hazard instructions 44a. For example, as shown in FIG. 3F, a set of hazard instructions 44a for a spill may include steps such as 1) placing cones around the area of the spill; 2) cleaning up spill using a spill clean-up kit; and contacting the manager on duty to report an issue. The user 12 may resolve the hazard by selecting button 44b, and following the hazard instructions 44a that are displayed in response to the user 12 selecting button 44b. Alternately, user 12 may select button 44c marked "Get Help", to display a paging display 70 (FIG. 3L). Paging display 70 includes a selector button 72 that when actuated generates a request assistance, for example, by electronically paging maintenance personnel to the location of the last barcode 17 scanned by user 12. A selector button 74 allows user 12 to return to the previous active display 18 prior to selecting button 44c.

If a hazard is not resolved contemporaneously, system 100 tracks the unresolved hazard until it is resolved at step 46. If multiple hazards boxes are selected from listing 42a, system 100 provides a set of instructions associated with each hazard identified, until all hazards are designated as having been resolved, or postponed for later resolution including reminder prompts. Next, at step 48, the system 100 displays a second, or subsequent inspection point 16, including a textual or visual description 48a of second or subsequent inspection point 16.

The above steps 36, 38 and 40-46, i.e., bar code scanning 36 and hazard identification 40 procedures, are repeated until inspection tour 14 is completed at step 50 (FIG. 3G). Display 18 displays a selection button 50a for user 12 to choose to exit the inspection tour 14. Also, inspection tour data 14 may be displayed such as, for example, the time elapsed since user 12 commenced inspection tour 14, the number of hazards resolved and unresolved, or omitted or skipped hazards.

Referring next to FIG. 3H, during an inspection tour 14, if a user skips a designated inspection point 16, user 12 is required to enter a reason for doing so. The reason may be selected from a skipped location display 52 of including one or more selection elements 52a identifying predetermined reasons for skipping a location, e.g., access to the associated bar code identfier 17 is blocked (Blocked"), the associated bar code identifier 17 is missing ("Missing"), or the associated bar code identifier 17 is damaged ("Damaged") or unreadable by the PDT 20. If user 12 indicates that the reason for skipping a location is that the bar code is missing from that location, system 100 may be programmed to immediately and automatically send an Email notification to store management and risk management. If the user 12 indicates that the reason a bar code location was missed due to the bar code identifier 17 being "Damaged" or "Missing", system 100 may be programmed to immediately send an email to a designated supervisor, e.g., store manager or risk management personnel, to notify the designated person to replace the damaged or missing bar code identifier 17 with a temporary bar code identifier 17. In one embodiment, the bar code identifier 17 may be tamper resistant. Once user 12 completes the selection of the skipped location from display 52, user selects an enter button 52b to confirm the selection.

Referring to FIG. 3I, System 100 also includes a hazard follow-up feature 60 to enable user 12 to track and resolve hazards identified during inspection tour 14. Hazard follow-up feature 12 may be automatically initiated by system 100 after user 12 indicates at step 50 that inspection tour 14 is completed. In another embodiment, Hazard follow-up feature 12 may be selectable by user 12 as a ""Hazard Follow-up" option included in scanner display 18. Hazard Follow-Up feature 60 is initiated at step 62 by identifying hazards for follow up. System 100 generates a list of location descriptions 62a and associated hazards 62b, that were identified during inspection tour 14. In one embodiment, one or more hazards 62b may be filtered to display a hazard type, e.g., a spill, and, the time elapsed since the hazard was entered. To resolve the hazard, user 12 selects the hazard indication from the displayed list by checking a checkbox 62c for one or more resolved hazards 62b, and then selecting "Resolve" button 62d to generate a listing of hazard instructions 44a, as described above with respect to step 44. A confirmation button (not shown) may be generated for the user 12 to indicate that the associated hazard report has been cleared. When all hazards 62b have been designated as being resolved, system 100 regenerates, or repaints, the display 18 by removing Resolve button 62d and providing an Exit button 62e.

At step 64, system 100 monitors hazardous conditions until all hazards have been resolved or user 12 indicated that the session is done. Referring next to FIG. 3J, system 100 determines at step 66 if all of the hazards have been resolved and generates a cleared confirmation screen 66a. If all hazards are confirmed to be cleared, an exit button 66b is provided on display 18 selectable by user 12, to return system 100 to start menu 30.

System 100 optionally provides additional features. Referring to FIG. 3K, at step 46, system optionally provides a "resolved now" feature 46a to allow user 12 to indicate when a hazard is detected and resolved during inspection tour 14, so that later followup is not required. User 12 is provided with a selection button 46b, which when selected by user 12 terminate inspection tour 14 at an intermediate point of tour 14.

Referring next to FIG. 3M, in response to a page request initiated by user 12 during inspection tour 14 (FIG. 3L), a paging status screen 76 displays a status of a current page request. System 100 generates multiple page requests in stages, according to a preprogrammed hierarchy. For example, a first level page 78a may be sent to a maintenance person. If no response is received to the first level page, a second level page 78b may be automatically sent, for example, to a COM after a predetermined interval, e.g., thirty seconds. If after another predetermined interval, no response to the second level page 78b, is received, a third level page may be automatically generated to, for example, a store manager. More or less page levels 78 may be incorporated into system 100 as deemed appropriate. In another embodiment, different level pages may be sent concurrently, by paging progressively more or less levels of recipients as successive intervals expire. Paging status screen 76 may further provide an optional selection button 79 to cancel a page, for example, when an issue is resolved while awaiting a response. Selection button 79 will generate a confirmation query to ensure that selection button was intentionally selected. If the user responds in the affirmative to the confirmation query, system sends a new notification to the page recipients, including anyone that previously acknowledged or responded to the page, to notify such recipients and/or responders that user 12 has cancelled the page, and the system returns to a screen where user 12 can resume hazards reporting.

In another aspect, a customizable reporting feature is disclosed that includes a Manager access feature and Corporate Access feature, which features are accessible locally and remotely via a private wireless network or secured Internet access. System 100 updates inspection data in real time as an inspection is being performed, except if the store wireless network becomes unavailable, in which case System 100 stores data in memory until the wireless network is detected again.

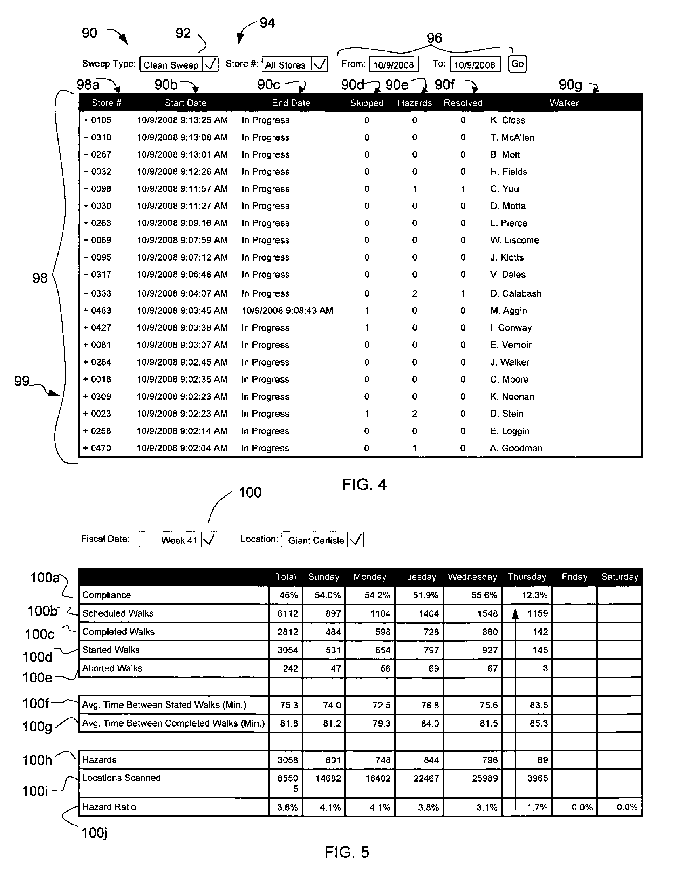

Referring to FIG. 4, summary reports and detailed reports may be selectably generated by system 100, including specific information related to the inspection time, date, inspector, and hazards, by store or by area, as well as follow-up documentation for resolving the hazard. A cumulative report 90, entitled "All Walks" provides a "Type" selection menu 92, i.e., type of inspection; a "Store" selection menu 94 for optionally filtering inspection data for a single district, or aggregating data for all stores for display; a calendar feature 96 for filtering data by date ranges, and a table 98 to structure the selected data, e.g., by columns including store no. 98a, start date 98b, end date 98c, which date columns may include actual time stamps in hours, minutes and seconds; "Skipped" 96d, i.e., total number of skipped inspection tours 14, by store, "Hazards" 98e, i.e., total number of hazards found for each store; "Resolved" 98f, i.e., total number of the hazard that are resolved; and "Associate" 98g, i.e., the name or other identification indicia, e.g., employee ID number, of the associate or employee conducting the associated inspection tour. Additional columns may be included that are not shown in FIG. 4, e.g., a column for indicating whether a row of report 90 is automatically generated by the system, or input from a manually generated report, e.g., to accommodate manual entry form in the case of a missed inspection tour 14. Navigation element 99 may be provided to display more pages of data when a table 98 is too large to display on a single display screen. The aggregated inspection table 98 may be used, for example, for legal documentation and detailed summary reports.

Referring next to FIG. 5, another report 100 may provide a daily summary of compliance by store, which report may be primarily used in-store for monitoring internal compliance and statistical performance data. An exemplary daily compliance report 100 may include a data row for overall compliance 100a, a data row for scheduled inspections 100b, a data row for completed inspections 100c, a data row for inspections started 100d, and a data row for inspections aborted 100e. Filtered data rows 100f, 100g, may include average time between inspections displayed 100f, and average time between completed inspections 100g. Filtering of averaged data may be selected in order to normalize data to account for off peak schedules, i.e., by calculating averages for inspections occurring between 6 a.m. and 11 p.m., representing normal shopping hours. In addition, results data rows 100h, 100i and 100j, may be displayed, for example, to show total and daily hazards 100h, locations scanned 100i and hazard ratio (by percent) 100j. When a compliance report 100 is generated during a work day, the current day compliance data may be adjusted pro rata to account for inspections that are not in the database yet because they are not yet due.

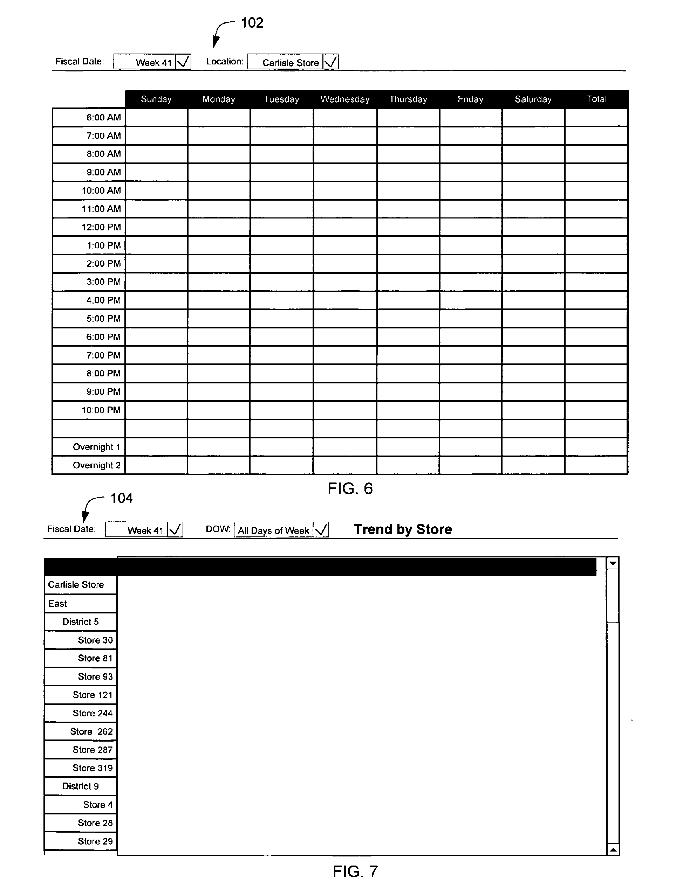

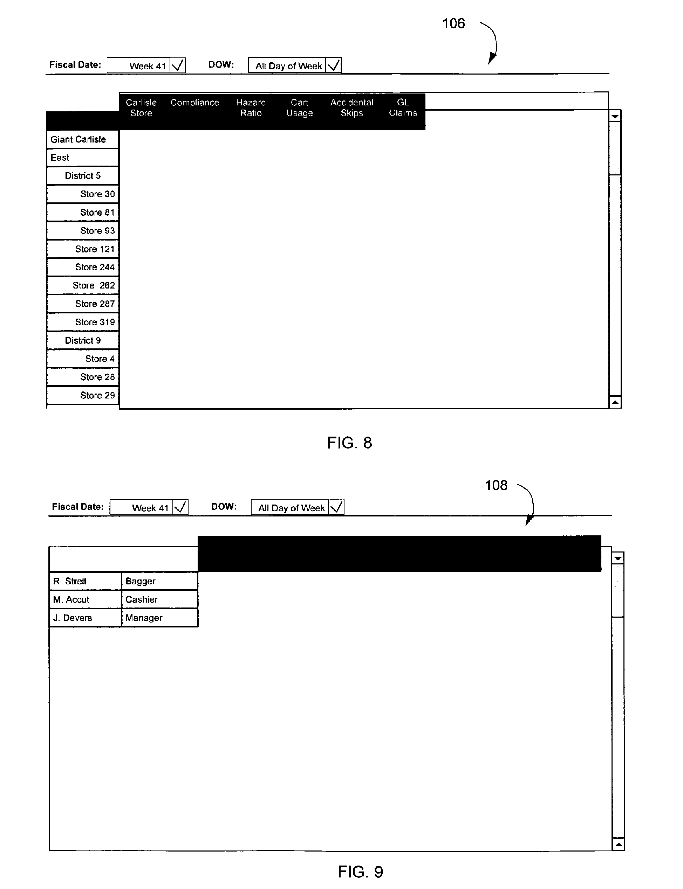

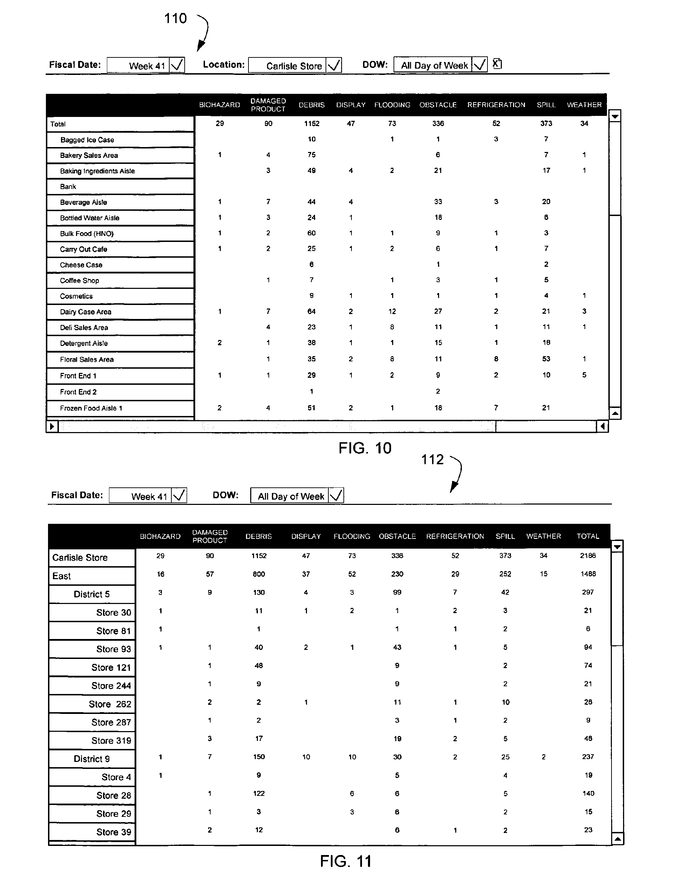

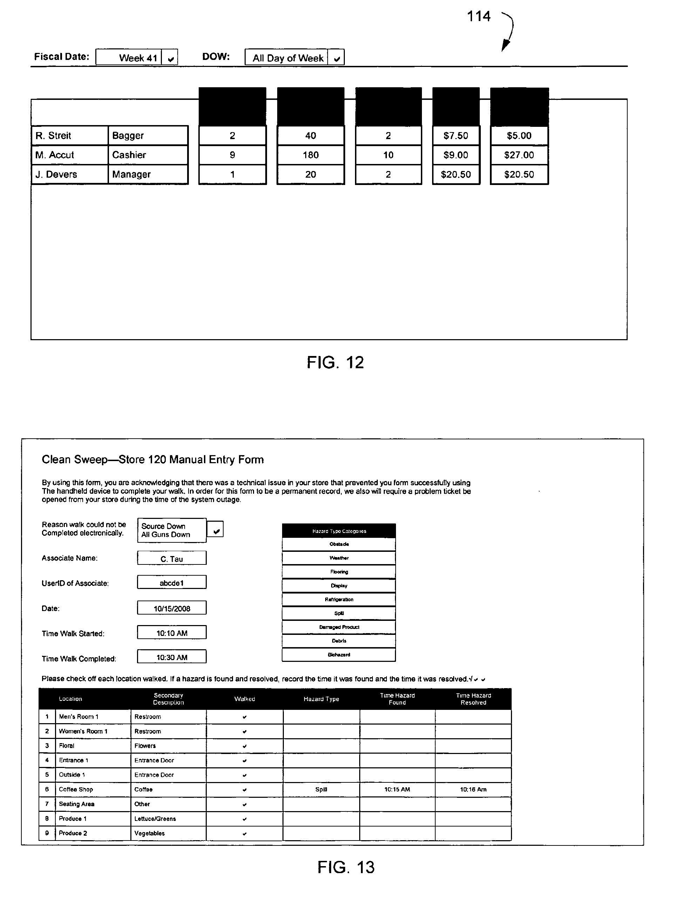

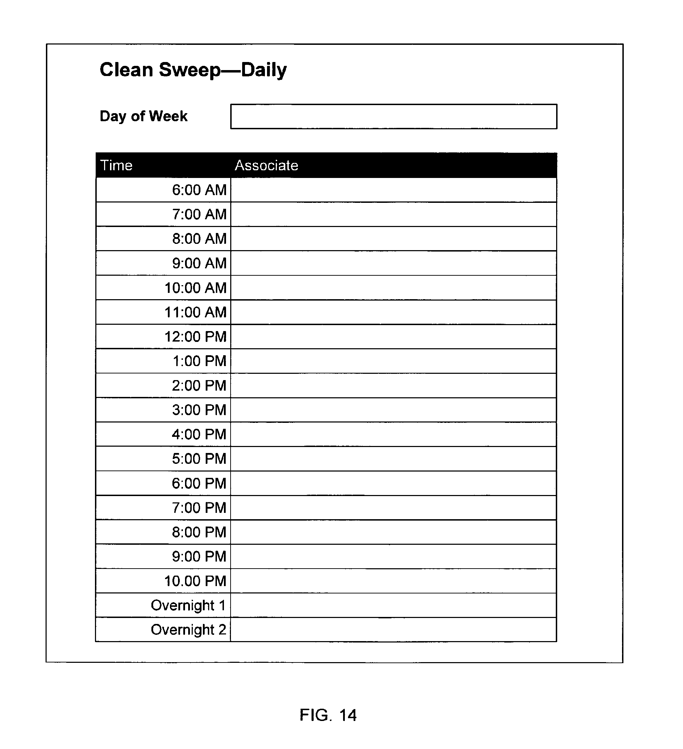

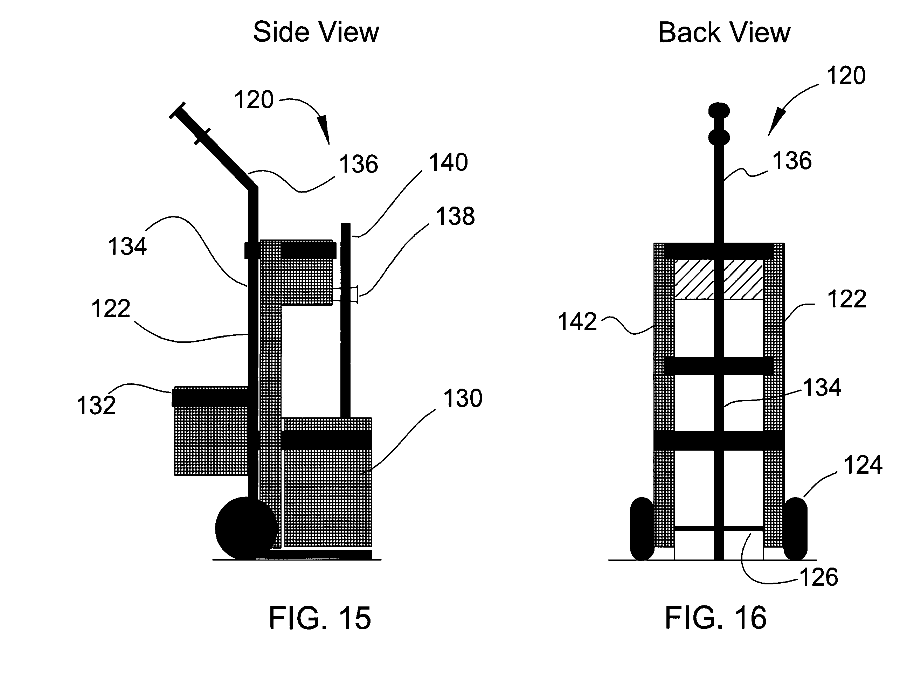

Further exemplary reports may be generated by system 100. Compliance by Hour reports 102, by store and week, used to determine hazard cleanup opportunities within a day, and to show immediate impact of system problems or issues. Hourly compliance data may be filtered for compliance-type date, e.g., inspection tour compliance, hazard ratio, accidentally skipped inspections, and cleanup cart usage (see FIGS. 15 and 16, discussed in detail below.) Compliance Trends by Store 104 (FIG. 7) may be used, for example, to display performance by, e.g., stores, districts and regions, and for all weekdays or for selected days of the week, over a selectable period covering a single week or multiple weeks. Summary by Store report 106 (FIG. 8) and by specified associate report 108 (FIG. 9), hazard by store section (or location) report 110 (FIG. 10), and by store report 112 (FIG. 11), are examples of various reports that may be generated by system 100. Also, labor details 114 (FIG. 12), manual entry forms 116 (FIG. 13), and scheduling tools 118 (FIG. 14) may be integrated into system 100.

A User Web Interface may be hosted on a secured intranet or Internet website, to which an authorized user may log in and view reports as they are updated in real time by system 100. An exemplary report may display "All Walks", including basic information for every walk or inspection tour 14 that takes place, regardless of store. The report may include store number, start and end date/time, number of areas skipped, number of hazards, number of hazards resolved, and the person's name that performed the walk, or combinations of these and other data. Other reports compiled by system 100 include Walk Compliance based on a predetermined threshold of number of walks that should take place per day (e.g., sixteen (16)). The Walk Compliance Report indicates percentage of compliance by day of the week, and optionally includes total walks scheduled, completed, started, and aborted. It also displays the average time between started and completed walks, and shows the basic number of hazards, locations scanned, and the hazard ratio for all stores. Yet another report may include a Hazards By Aisle report, and displays all of the store locations, and the number of hazards that have been reported in those areas. Yet another report may include Hazards by Store, which lists all of the hazards that have been reported over a selectable period of time, and shows to which stores the hazards were associated.

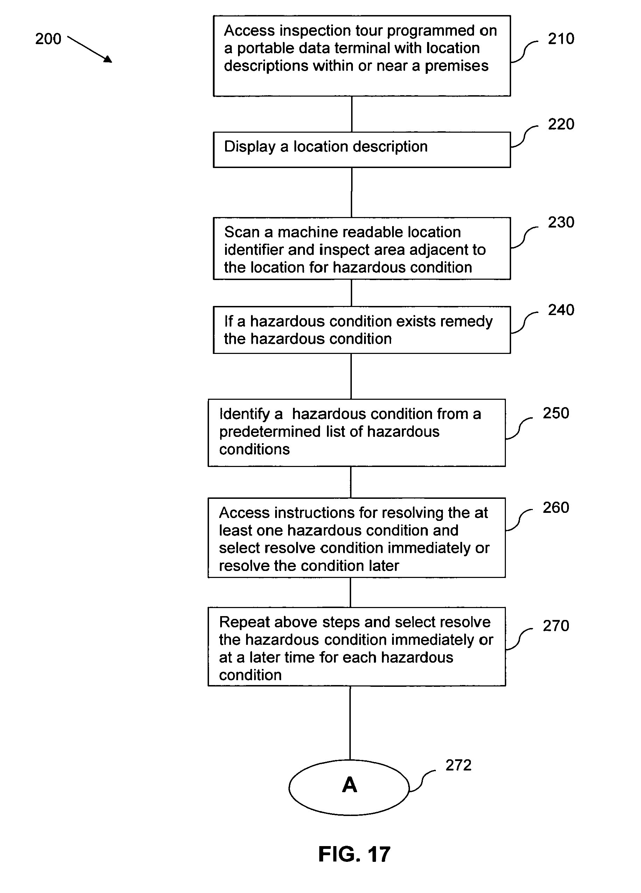

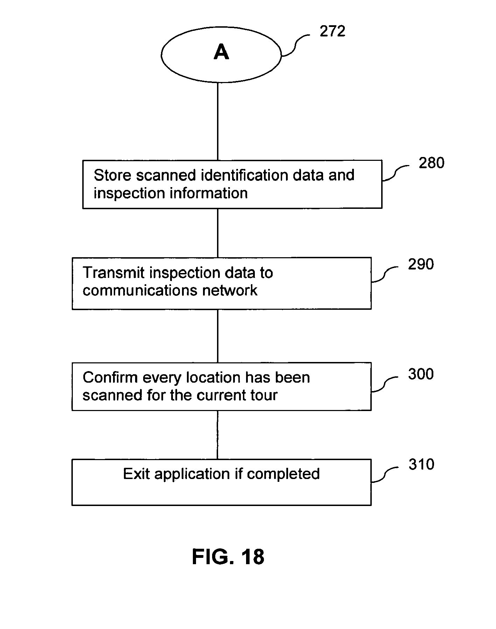

Referring next to FIGS. 17 and 18, a flow chart 200 of the premises inspection system discloses an exemplary method for the user to follow. At step 210, the user accesses an inspection tour that is stored or programmed on a portable data terminal including a set of location descriptions within or near a premises for multiple locations of a premises. The method then proceeds to step 220, to display a location description on the portable data terminal of one of the multiple locations. At step 230, the user scans a machine readable location identifier and inspects the area adjacent to the location for any hazardous condition, the location identifier including inspection data associated with the displayed location description the premises. The method then proceeds to step 240, in which if a hazardous condition exists the user selects from options to remedy the hazardous condition. From step 240 the method proceeds to step 250, in which the user can identify a hazardous condition that is presently observed by the user at the associated selecting from a predetermined list of hazardous conditions. Next, at step 260 the user may access instructions for resolving the at least one hazardous condition and select one of two options, i.e., (1) resolve the hazardous condition immediately or (2) resolve the hazardous condition at a later time. At step 270 the user repeats the previous described steps 220-260 and selects resolve the hazardous condition immediately or at a later time for each hazardous condition. The method continues on FIG. 18 as indicated by continuation element A indicated as 272. Next, the user at step 280 stores scanned identification data and inspection information associated with each location description. The method then proceeds to step 290, to transmit inspection data contemporaneously to a communications network. At step 300, the method confirms that every location associated with the plurality of location descriptions for the current tour has been scanned. If every location in the current tour has been scanned (or if not, has somehow been accounted for, e.g., a missing identification label prevented the location identifier from being scanned), then at step 310, the user exits the application if completed; alternately, the user may begin a new inspection tour.

Referring next to FIGS. 15 and 16, a vehicle 120 may be employed by user 12 during inspection tours 14 to resolve hazards as they are encountered, or shortly thereafter. Vehicle 120 includes various facilities for user 12 to resolve hazards. Chassis 122 includes a base portion 128 at one end to support chassis in a stable, freestanding upright position when stationary. Chassis 122 is connected to base portion 128 at approximately 90° vertical angle. A pair of wheels 124 connected by an axle 126 is attached to chassis adjacent to base portion 128. Alternately, vehicle may include three or more wheels 124. Chassis 122 has multiple brackets 132 attached thereto. As shown, vehicle 120 includes three brackets 132, although more or less brackets 132 may be provided. A handle 134 is attached to chassis 122 extending from base portion 128 to allow user 12 to tilt vehicle 120 to elevate base portion 128 to enable vehicle to roll on wheels 124. An angled grip 136 may be provided on handle 134 at an end opposite base portion 128.

Brackets 132 define openings to accommodate a box or container 130, and are configured to support the weight of the container 130 suspended therefrom. Containers 130 may be all the same size, or different sizes as shown in the drawings, or combinations thereof. In one embodiment, a bottom container 130 may be the largest of the three containers, for receiving items of trash and spilled product when the user 12 resolves a hazardous condition by, for example, cleaning up a spill on the floor of the premises 10. Alternately, bottom container 130 may serve as a reservoir for a cleaning fluid for mopping the area of a spill. A rear container 130 may be positioned on the opposite side of the frame 122 for receiving and storing products recovered from spills. A top container 130 may be used to store cleaning implements and supplies, e.g., paper towels, spray bottles, sponges and similar items. Top container 130 or bracket 132 may include one or more clips 138 for receiving and releasably retaining long handled tools 140, e.g., mops and brooms for user 12 to use when cleaning up spilled debris. The vehicle 120 may also have a unique, electronically-readable identification label 142, e.g. barcode label or RFID microchip, affixed thereto, to provide the user 12 with the ability to scan and store data related to vehicle usage in association with inspection tour, and to verify compliance with rules applicable to vehicle usage during an inspection tour.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

The present application contemplates methods, systems and program products on any machine-readable media for accomplishing its operations. The embodiments of the present application may be implemented using an existing computer processors, or by a special purpose computer processor for an appropriate system, incorporated for this or another purpose or by a hardwired system.

As noted above, embodiments within the scope of the present application include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions comprise, for example, instructions and data which cause a general purpose computer, special purpose computer, or special purpose processing machines to perform a certain function or group of functions.

It should be noted that although the figures herein may show a specific order of method steps, it is understood that the order of these steps may differ from what is depicted. Also two or more steps may be performed concurrently or with partial concurrence. Such variation will depend on the software and hardware systems chosen and on designer choice. It is understood that all such variations are within the scope of the application. Likewise, software implementations could be accomplished with standard programming techniques with rule based logic and other logic to accomplish the various connection steps, processing steps, comparison steps and decision steps.

## Claims

1. A premises inspection method comprising:
accessing, by a user, an inspection tour stored on a portable data terminal, the inspection tour comprising a plurality of location descriptions associated with a plurality of locations of a premises;
displaying on the portable data terminal a location description from the plurality of location descriptions;
scanning a machine readable location identifier with the portable data terminal upon arrival at a location of the premises associated with the displayed location description, the location identifier comprising inspection data associated with the displayed location description of the premises;
inspecting an area adjacent to the location of the premises to determine whether a hazardous condition exists;
in response to determining an existence of a hazardous condition at the area adjacent to the location of the premises, remedying the hazardous condition, wherein remedying the hazardous condition comprises:
identifying at least one hazardous condition from a predetermined list of hazardous conditions;
accessing a set of instructions for resolving the at least one hazardous condition;
selecting one of: resolving the at least one hazardous condition immediately or resolving the at least one hazardous condition at a later time; and
repeating the steps of identifying at least one hazardous condition from a predetermined list of hazardous conditions;
accessing a set of instructions for resolving the at least one hazardous condition; and resolving the at least one hazardous condition immediately or resolving the at least one hazardous condition at a later time until each identified hazardous condition is selected for immediate or later resolution;
repeating the steps of identifying at least one hazardous condition from a predetermined list of hazardous conditions;
accessing a set of instructions for resolving the at least one hazardous condition; and resolving the at least one hazardous condition immediately or resolving the at least one hazardous condition at a later time for each respective location associated with the plurality of location descriptions;
storing the scanned identification data and inspection information associated with each location description of the plurality of location descriptions; and
transmitting the stored inspection data contemporaneously to a communications network.

2. The method of claim 1, further comprising:
confirming that every location of the plurality of location descriptions has been scanned since the inspection tour was initiated;
in response to receiving the selection by the user of at least one hazard to be resolved later, providing a prompt to the user providing a listing of each hazard remaining to be resolved;
selecting the at least one hazard from the listing; clearing a resolved at least one hazard; and
confirming that the at least one hazard has been cleared from the listing.

3. The method of claim 2, further comprising:
in response to additional hazards of the at least one hazard remaining to be resolved, providing a second prompt to the user, the second prompt comprising the listing of each hazard remaining to be resolved and in response to all of the at least one hazard being cleared from the listing, terminating the software application and returning to a start menu.

4. The method of claim 1, further comprising displaying data related to the inspection tour comprising one or more of: elapsed time, hazards resolved, and accidentally omitted locations.

5. The method of claim 1, further comprising requesting assistance to resolve a hazardous condition, and in response to requesting assistance, tracking the hazardous conditions in a listing to remind the user to resolve the associated hazardous condition at an end of the inspection tour.

6. The method of claim 5, further comprising, in response to requesting assistance, automatically generating one or more wireless paging signals in hierarchical order in predetermined time increments.

7. The method of claim 1, further comprising providing an omitted location prompt in response to the user omitting one location of the inspection tour, and displaying a plurality of reasons for omitting the associated location, wherein the plurality of reasons includes accidental, blocked, missing or damaged identifier.

8. The method of claim 1, further comprising: confirming that a hazard has been resolved; or terminating the software application after completing the inspection steps for a final location of the plurality of location descriptions; or wherein in the accessing step the user is an authorized user and the authorized user is required to input a unique login code and a secure password, confirming that the unique login code and password is associated with the authorized user, and providing access to the user; or exiting the software application prior to completion of inspection steps of all of the plurality of location descriptions.

9. The method of claim 1, further comprising aggregating data for generating report features for multiple inspection tours filterable by type of inspection, one or more stores in a district, and date range, compliance rate tracking per store by week and day; hourly compliance; trends; associate records per inspector; hazardous conditions recorded by location within a premises or by premises; a manual input form; and a schedule builder for posting daily employee inspection schedules.

10. The method of claim 1, further comprising:
providing a vehicle transportable by the user, the vehicle comprising:
a frame portion
at least one wheel rotatably attached to the frame;
a plurality of brackets attached to the frame, each bracket of the plurality of brackets comprising an opening for receiving a containers; and
and
a machine readable device identifier affixed to the vehicle.

11. A system for automated premises inspection comprising:
a portable data terminal in communication with a data network, a web interface for accessing an internet or intranet connection to a remote data storage device, a plurality machine readable location identifiers comprising inspection data associated with a plurality of locations, and a local memory device, the portable data terminal comprising a software application configured to:
access an inspection tour by a user, the inspection tour comprising a plurality of location descriptions associated with a plurality of locations within a premises;
display on the portable data terminal a plurality of location descriptions;
scan with the portable data terminal the machine readable location identifier;
prompt the user with inspection criteria for an area of the premises adjacent to each location description of the plurality of location descriptions to determine whether a hazardous condition exists;
in response to determining an existence of a hazardous condition at the first location, provide selection options comprising:
identify at least one hazardous condition from a predetermined plurality of possible hazardous conditions;
store the scanned identification data associated with each location of the plurality of location descriptions; and
automatically transmit the stored inspection data contemporaneously to a communications network.

12. The system of claim 11, further comprising wherein for each of the identified at least one hazardous condition, the software application is configured to:
access a set of instructions for resolving the at least one hazardous condition;
resolve the at least one hazardous condition immediately;
or resolve the at least one hazardous condition at a later time.

13. The system of claim 11, the software application being further configured to repeatedly scan, identify and select at the next location, for each respective location associated with the plurality of location descriptions.

14. The system of claim 11, wherein the software application being further comprised to prompt the user to proceed to a next location of the plurality of location descriptions in response to 1) determining no hazardous condition exists, or 2) completing the selecting step for every identified hazardous condition; or wherein the data network includes at least one wireless communications network.

15. A vehicle for use in association with an automated inspection system, the vehicle comprising:
a frame portion
at least one wheel rotatably attached to the frame;
a plurality of brackets attached to the frame, each bracket of the plurality of brackets comprising an opening for receiving a container,
at least one container removably supported by at least one of the plurality of brackets; and
a machine readable device identifier affixed to the vehicle.
